(19) Europäisches Patentamt

European Patent Office

Office européen des brevets

(11) **EP 1 488 295 B1**

(12) **FASCICULE DE BREVET EUROPEEN**

(45) Date de publication et mention
de la délivrance du brevet:
**15.11.2006 Bulletin 2006/46**

(21) Numéro de dépôt: **03725295.4**

(22) Date de dépôt: **17.03.2003**

(51) Int Cl.:
***G05B 23/02*** *(2006.01)*

(86) Numéro de dépôt international:
**PCT/FR2003/000845**

(87) Numéro de publication internationale:
**WO 2003/079128 (25.09.2003 Gazette 2003/39)**

(54) **PROCEDE ET DISPOSITIF DE SUIVI DE PERFORMANCES D'UN EQUIPEMENT INDUSTRIEL**

VERFAHREN UND VORRICHTUNG ZUR VERFOLGUNG DER LEISTUNGEN EINER INDUSTRIELLEN VORRICHTUNG

METHOD AND DEVICE FOR MONITORING THE PERFORMANCE OF INDUSTRIAL EQUIPMENT

(84) Etats contractants désignés:
**AT BE BG CH CY CZ DE DK EE ES FI FR GB GR HU IE IT LI LU MC NL PT RO SE SI SK TR**

(30) Priorité: **20.03.2002 FR 0203454**

(43) Date de publication de la demande:
**22.12.2004 Bulletin 2004/52**

(73) Titulaire: **L'air Liquide, S.A. à Directoire et Conseil de Surveillance pour l'Etude et l'Exploitation des Procédés Georges Claude
75321 Paris Cedex 07 (FR)**

(72) Inventeurs:
• **DROUART, Caroline
F-92320 Chatillon (FR)**
• **ROBA, Thierry
B-4540 AMSPIN (BE)**

(74) Mandataire: **Ducreux, Marie et al
L'Air Liquide,
Service Propriété Industrielle,
75 Quai d'Orsay
75321 Paris cedex 07 (FR)**

(56) Documents cités:
**EP-A- 0 516 534          US-A- 4 325 223
US-A1- 2001 034 582**

**Description**

L'invention concerne un procédé de suivi automatique de performances d'un équipement industriel, ainsi qu'un dispositif pour la mise en oeuvre de ce procédé.

Un domaine d'application de l'invention est les unités de production d'oxygène par séparation des composants de l'air, utilisant un ou plusieurs compresseurs d'air, d'oxygène ou d'azote.

Le suivi des performances de l'équipement industriel sert à planifier la maintenance de celui-ci et à surveiller sa productivité. Ainsi, on constate généralement que les bénéfices d'un projet d'optimisation d'un équipement industriel sont souvent réduits à néant après quelques années, si on ne dispose pas d'un suivi permettant de détecter et de corriger la moindre dérive du fonctionnement de cet équipement industriel.

Aussi, l'exploitant de l'équipement industriel souhaite disposer d'un indicateur de performance de l'équipement industriel, qui reflète de manière fiable toute dégradation de celui-ci. Ainsi, il faut pouvoir faire la distinction entre une dégradation de l'équipement industriel et une simple variation de ses conditions de fonctionnement.

Le document US 2001/0034582 décrit un système de gestion d'énergie pour un système frigorifique.

Le document EP-B-516 534 décrit un procédé de surveillance d'un appareil fonctionnant dans des conditions variables, fournissant un paramètre de performance normalisé, qui est, pour un compresseur d'une turbine à gaz entraînant un alternateur alimentant un réseau de distribution d'énergie électrique, un débit d'air ou un rendement polytropique. Ce procédé utilise un modèle quantifié du comportement de l'appareil à surveiller, établi expérimentalement à partir de mesures faites sur l'appareil lorsqu'il est dans un état interne connu, par exemple lorsqu'il est neuf. Les mesures sont effectuées sur des paramètres d'influence représentatifs de conditions variables d'origine externe dans lesquelles l'appareil est amener à fonctionner, tels que la pression atmosphérique, la température ambiante, l'humidité ambiante, le débit d'un carburant alimentant la turbine, la composition du carburant, la température du carburant, l'état de stabilisation thermique de la turbine avec son compresseur et la fréquence du réseau de distribution d'énergie électrique. Toutefois, ce modèle ne convient pas au suivi de performances d'unités de production de gaz précitées. En particulier, ce procédé ne permet pas de suivre de manière fine un facteur de performance tel qu'une consommation énergétique ou un rendement isothermique d'un compresseur, peu corrélé aux paramètres d'influence précités.

L'invention vise à obtenir un procédé et un dispositif de suivi automatique de performance d'un équipement industriel, palliant les inconvénients de l'état de la technique.

A cet effet, un premier objet de l'invention est un procédé de suivi automatique de performances d'un équipement industriel de production de fluide comprenant un compresseur refroidi au cours du fonctionnement de l'équipement industriel de production de fluide, dans lequel

- on mesure, à l'aide de moyens de mesure, des paramètres de fonctionnement de l'équipement industriel, comprenant au moins le débit de gaz dans le compresseur, la pression de gaz entrant dans le compresseur, la pression de gaz sortant du compresseur, la température du réfrigérant du compresseur,
- on calcule, à l'aide de moyens de calcul, à partir des paramètres mesurés et d'une règle de calcul stockée dans des moyens de stockage, un facteur de performance représentatif du fonctionnement de l'équipement industriel,
- on indique à un utilisateur, à l'aide de moyens d'indication, une information de suivi de performance en fonction du facteur de performance calculé.

Grâce à l'invention, il est indiqué automatiquement à un utilisateur des informations sur les conditions réelles existant dans l'équipement industriel, sur lequel le procédé de suivi est mis en oeuvre. Ainsi, le procédé peut être mis en oeuvre facilement par des non-spécialistes. La précision obtenue dans la détection de la dégradation de l'état de l'équipement industriel est aussi bonne voire supérieure à celle obtenue par les systèmes connus.

Suivant d'autres caractéristiques de l'invention,

- au cours d'une étape de calibration, on mesure automatiquement, à l'aide desdits moyens de mesure, au moins une fois au cours du temps, lesdits paramètres de fonctionnement de l'équipement industriel, on mémorise des valeurs mesurées des paramètres de fonctionnement dans une mémoire et on calibre la règle de calcul en fonction d'au moins un sous-ensemble parmi l'ensemble des valeurs mesurées des paramètres de fonctionnement présentes dans la mémoire, l'étape de calibration pouvant être redéclenchée par l'utilisateur en vue d'une nouvelle calibration de ladite règle de calcul ;
- la règle de calcul du facteur de performance comprend le calcul d'un rendement $\eta_{est}$ estimé du compresseur selon l'équation suivante :

$$\eta_{est} = AQ + \frac{B\ P_{out}}{P_{in}} + C\ T_{réfr} + D_2 T_g + E$$

dans laquelle Q est le débit de gaz dans le compresseur,

$P_{in}$ est la pression de gaz entrant dans le compresseur,

$P_{out}$ est la pression de gaz sortant du compresseur,

$T_{réfr}$ est la température du réfrigérant du compresseur,

A, B, C, D2 et E sont des paramètres de réglage prédéterminés, la température $T_g$ du gaz entrant dans le compresseur étant mesurée, à l'aide des moyens de mesure, pour le paramètre D2 de réglage choisi non nul;

- le facteur de performance correspond à une consommation énergétique $P_{est}$ estimée du compresseur selon l'équation suivante :

$$P_{est} = \left[ Q\, RT_{réfr} \ln (P_{out} / P_{in}) \right] \Big/ \eta_{est}$$

- les paramètres de réglage A, B, C, D2, E sont calculés par régression linéaire à partir du au moins sous-ensemble de valeurs mesurées des paramètres de fonctionnement présentes dans la mémoire ;
- la règle de calcul est déterminée à partir d'un réseau neuronal dont l'auto-apprentissage est réalisé à partir du au moins sous-ensemble de valeurs mesurées des paramètres de fonctionnement présentes dans la mémoire, les paramètres A, B, C, D, E de réglage disparaissant lorsqu'on utilise un réseau neuronal ;
- on effectue l'étape de calibration sur commande de l'opérateur, par exemple après une opération de maintenance de compresseur ;
- on utilise le facteur de performance calculé pour déclencher une alarme, lorsque le facteur de performance calculé ne vérifie pas des conditions prescrites.

Un deuxième objet de l'invention est un dispositif pour la mise en oeuvre du procédé de suivi automatique de performances de l'équipement industriel de production de fluide, caractérisé en ce qu'il comporte des moyens de mesure desdits paramètres de fonctionnement, des moyens de calcul dudit facteur de performance à partir de la règle de calcul présente dans les moyens de stockage et à partir des mesures fournies par les moyens de mesure, et des moyens d'indication d'une information de suivi de performance à un utilisateur à partir du facteur de performance calculé.

Suivant une caractéristique, le dispositif comporte un moyen de commande de calibration de la règle de calcul.

L'invention sera mieux comprise à la lumière de la description qui va suivre, donnée uniquement à titre d'exemple non limitatif, en référence au dessin annexé, sur lesquels

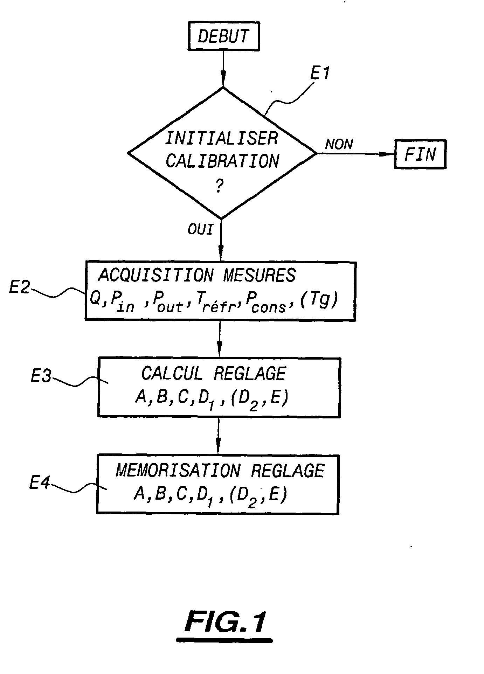

- la figure 1 représente un organigramme du principe de fonctionnement du procédé et du dispositif de suivi suivant l'invention dans une phase de calibration,
- la figure 2 représente un organigramme du principe de fonctionnement du procédé et du dispositif de suivi suivant l'invention dans une phase de prédiction, et

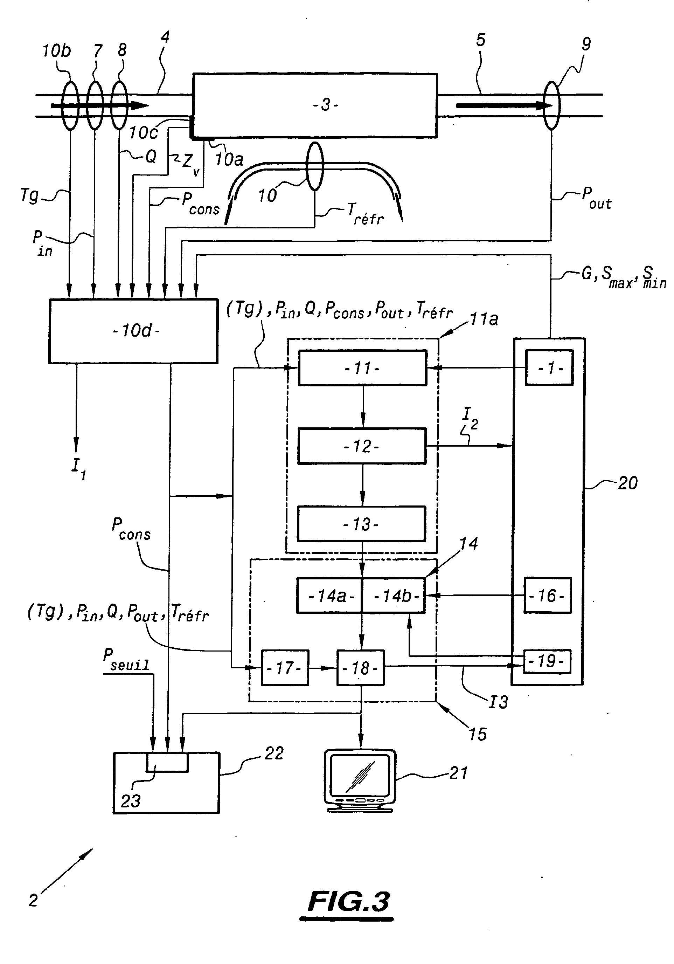

- la figure 3 représente schématiquement le dispositif de suivi de performance suivant l'invention.

Aux figures, on détermine d'abord, au cours de l'étape E1 préalable, si une nouvelle calibration doit être initialisée ou non. Cette interrogation est effectuée à l'aide d'un bouton 1 de commande matérielle ou logicielle du dispositif, par exemple sous forme d'une touche de commande sur un écran d'ordinateur. L'actionnement du bouton 1 provoque une nouvelle initialisation de la calibration par le passage aux étapes E2, E3 qui seront décrites ci-dessous.

Le dispositif 2 de suivi est destiné à être monté sur un ou plusieurs compresseurs 3 intervenant dans un équipement industriel. Le compresseur 3 comprend une entrée 4 de gaz et une sortie 5 de gaz comprimé à l'aide d'un moyen de compression contenu dans le compresseur 3. Le compresseur 3 est refroidi par un circuit 6 de refroidissement, dans lequel circule un fluide de réfrigération, tel que par exemple de l'eau. Un capteur 7 de pression, appelé capteur de pression entrant, est monté sur l'entrée 4 pour mesurer la pression de gaz entrant dans le compresseur 3. Un capteur 8 de débit, est monté sur l'entrée 4 pour mesurer le débit de gaz entrant dans le compresseur 3. Bien entendu, le capteur 8 peut également être monté sur la sortie 5 pour mesurer le débit de gaz sortant, au lieu d'être monté sur l'entrée 4. Un capteur 9, appelé capteur de pression sortant, est monté sur la sortie 5 pour mesurer la pression de gaz sortant du compresseur 3. Un capteur 10 de température est monté sur le circuit 6 de refroidissement pour mesurer la température du réfrigérant. Un capteur 10a de consommation énergétique du compresseur est également prévu, par exemple un capteur 10a de puissance électrique consommée. Il peut le cas échéant être prévu un capteur supplémentaire 10b sur l'entrée 4 du compresseur 3, permettant de mesurer la température $T_g$ du gaz entrant. Il est également prévu sur le compresseur 3 un capteur 10c de la position $Z_v$ ouverte ou fermée d'une vanne de mise à l'air.

Les capteurs 7, 8, 9, 10, 10a, 10c et le cas échéant 10b sont reliés à une unité 10d de réception de mesures, dans laquelle peuvent être entrés des gabarits G pour chacune des grandeurs mesurées, par exemple un seuil maximal Smax et un seuil minimal Smin pour des plages de valeurs. Dans l'unité 10d de réception de mesures, les valeurs des paramètres précités de pression de gaz entrant $P_{in}$, de débit de gaz Q, de pression de gaz sortant $P_{out}$, de température de réfrigérant $T_{réfr}$, de consommation d'énergie $P_{cons}$, de la position $Z_v$ de la vanne de mise à l'air, et le cas échéant de température $T_g$ du gaz entrant, reçues des capteurs 7, 8, 9, 10, 10a, 10c, 10b sont sélectionnées à l'aide des gabarits G. La sélection est effectuée par exemple par filtrage par rapport aux gabarits G de valeur prescrite pour chaque paramètre et par élimination des valeurs ne se trouvant pas dans ces gabarits. Ces gabarits sont par exemple des plages de valeurs numériques prédéterminées Smin à Smax, dépendant des capteurs 7, 8, 9, 10, 10a, 10b et du compresseur 3. L'unité 10d de réception de mesures comporte un ou plusieurs indicateurs 11 de qualité des mesures, par exemple du nombre ou du pourcentage de mesures ne rentrant pas dans les gabarits G.

Lorsqu'il a été appuyé sur le bouton 1 de commande, il est procédé, au cours de l'étape suivante E2, à l'acquisition de mesures de la pression de gaz entrant $P_{in}$, du débit Q de gaz entrant ou sortant, de la pression $P_{out}$ de gaz sortant, de la température $T_{réfr}$ de réfrigérant, de la consommation d'énergie $P_{cons}$, de la position $Z_v$ de la vanne de mise à l'air, et le cas échéant de la température $T_g$ du gaz entrant, fournies par l'unité 10d de réception des mesures des capteurs 7, 8, 9, 10, 10a, 10c, 10b correspondants, dans une mémoire 11 d'une unité de calibration 11 a automatique. Il est ainsi fourni par l'unité 10d de réception de mesures un sous-ensemble de mesures de paramètres parmi l'ensemble des mesures reçues des capteurs.

La mémoire 11 est apte à accumuler, pour chaque paramètre $P_{in}$, Q, $P_{out}$, $T_{réfr}$, $P_{cons}$, $Z_v$ et le cas échéant $T_g$, plusieurs valeurs mesurées successivement fournies par l'unité 10d de réception, par exemple toutes les heures ou autres. Il est enregistré dans la mémoire 11 les mesures effectuées au moins une fois au cours du temps, et par exemple régulièrement au cours d'une période donnée, par exemple de 3 mois. La quantité de données servant à la calibration, enregistrée dans la mémoire 11 est limitée aux mesures effectuées pendant une période donnée, par exemple un an.

Lorsqu'un nombre suffisant de mesures ont été acquises dans la mémoire 11, ou lorsqu'une période de temps prescrite est écoulée depuis le dernier appui sur le bouton 1 de commande, il est calculé, au cours de l'étape suivante E3, dans un premier module 12 de calcul de l'unité 11 a de calibration, des paramètres de réglage d'une règle ou modèle de calcul prédéterminé d'un facteur de performance du compresseur 3, à partir de ou des paramètres mesurés présents dans la mémoire 11. En variante, lesdits paramètres de réglage de la règle de calcul prédéterminée du facteur de performance du compresseur 3 sont calculés sur la base des dernières mesures de paramètre effectuées, enregistrées dans la mémoire 11 et des paramètres de réglage calculés précédemment par une méthode récursive, la calibration étant alors adaptative.

Le facteur de performance est représentatif du fonctionnement de l'équipement industriel, et, par exemple de la consommation d'énergie du compresseur. Le facteur de performance est par exemple calculé à partir d'une combinaison de paramètres de fonctionnement $P_{in}$, Q, $P_{out}$, $T_{réfr}$, et le cas échéant $T_g$, notamment à partir d'une combinaison linéaire de un ou plusieurs des paramètres de fonctionnement.

Le facteur de performance est par exemple calculé linéairement en fonction du rapport de la pression de gaz sortant sur la pression de gaz entrant $P_{out}/P_{in}$.

Dans un premier mode de réalisation, la règle de calcul du facteur de performance comprend le calcul d'un rendement $\eta_{est}$ estimé du compresseur selon l'équation (1) suivante :

$$\eta_{est} = AQ + B\frac{P_{out}}{P_{in}} + C\,T_{réfr} + D_1 \qquad\qquad (1)$$

Dans un autre mode de réalisation, le calcul du facteur de performance comprend le calcul d'un rendement $\eta_{est}$ estimé du compresseur selon l'équation (2) suivante :

$$\eta_{est} = AQ + B\frac{P_{out}}{P_{in}} + C\,T_{réfr} + D_2 T_g + E \qquad\qquad (2)$$

Le facteur de performance correspond par exemple à une consommation énergétique $P_{est}$ estimée du compresseur selon l'équation (3) suivante :

$$P_{est} = \left[ Q\ RT_{réfr}\ \ln (P_{out}/P_{in}) \right] \bigg/ \eta_{est} \qquad\qquad (3)$$

Où ln désigne le logarithme népérien.

Dans les équations (1), (2), (3), A, B, C, D1, D2 et E sont les paramètres de réglage. Ces paramètres de réglage sont calculés au cours de l'étape E3 dans le premier module 12 de calcul, par exemple par régression linéaire, à partir du sous-ensemble sélectionné de valeurs présentes dans la mémoire 11, ou de l'ensemble de celles-ci. Dans ce cas, ce modèle n'est utilisé que lorsqu'il a été déterminé par l'unité 10d de réception de mesures que la position $Z_v$ de la vanne de mise à l'air était fermée pour ne pas y laisser passer de fluide.

Dans un autre mode de réalisation, la règle de calcul du facteur de performance est déterminée à partir d'un réseau neuronal présent dans le premier module 12 de calcul. L'auto-apprentissage du réseau neuronal est réalisé à partir du sous-ensemble de valeurs sélectionnées dans la mémoire 11 ou de l'ensemble de celles-ci. On estime, à l'aide du réseau neuronal, soit le facteur de performance $P_{est}$ en fonction des paramètres explicatifs Q, $P_{out}$, $T_{réfr}$, $P_{in}$, $Z_v$ et le cas échéant Tg, soit le facteur de performance $P_{est}$ selon l'équation (3) en estimant rendement $\eta_{est}$ en fonction des paramètres explicatifs Q, $P_{out}$, $T_{réfr}$, $P_{in}$, $Z_v$.

Dans un mode de réalisation, ce réseau neuronal sert à partitionner l'espace des paramètres explicatifs, c'est-à-dire des paramètres de fonctionnement précités, ce qui permet d'appliquer une régression locale à chaque région de l'espace ainsi partitionné. Lorsque les modèles locaux ont été déterminés par apprentissage dans le module 12 de calcul , le facteur de performance est calculé ensuite en référence à ces modèles locaux.

Dans un autre mode de réalisation, le réseau de neurones comprend deux couches, dont la première est non linéaire et contient un nombre de neurones proches du nombre d'entrées (par exemple entre trois et dix neurones) et dont la deuxième contient le neurone de sortie relié à la première couche.

Lorsque les paramètres de réglage de la règle de calcul du facteur de performance ou la règle de calcul du facteur de performance elle-même a été déterminée dans le premier module 12 de calcul, celle-ci est mémorisée dans des moyens 13 de stockage de l'unité 11 a de calibration, au cours de l'étape E4.

Les moyens de stockage 13 sont interrogeables pour fournir les paramètres de réglages A, B, C, D1 ou A, B, C, D2, E y contenus. Ainsi, les étapes successives E2 d'acquisition, E3 de réglage et E4 de mémorisation constituent une phase de calibration de la règle de calcul du facteur de performance.

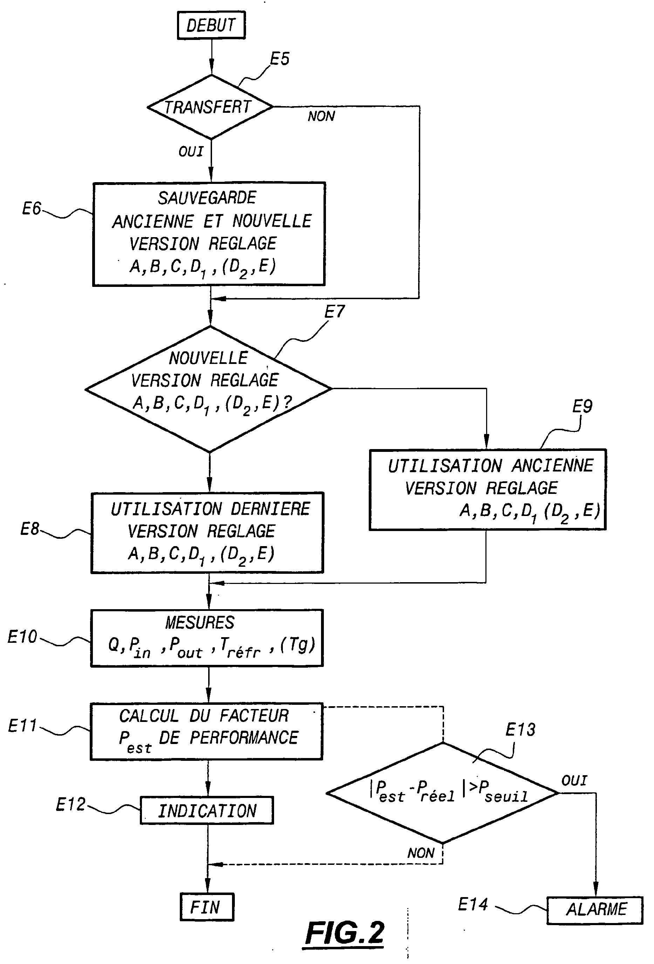

Lorsque la règle ou modèle de calcul du facteur de performance a été calibrée, on peut calculer automatiquement le facteur de performance en fonction des paramètres de fonctionnement dans une unité 14 de prédiction. Il est déterminé, au cours de l'étape E5 à la figure 2, si on provoque le transfert des paramètres de réglages présents dans les moyens 13 à une mémoire 14 de sauvegarde de paramètres de réglage d'une unité 15 de prédiction. Le module 12 de calcul comporte un ou plusieurs indicateurs I2 de qualité de calibration, pour permettre à un utilisateur de décider, si il peut commander, au cours de l'étape E5, le transfert du modèle calibré dans l'unité 11 a à l'unité 15 de prédiction, ou s'il doit réinitialiser la calibration au cours de l'étape E1. Par exemple, l'indicateur I2 indique l'erreur relative moyenne de modélisation et/ou le nombre de points de mesure ayant servi à la calibration. Cet indicateur I2 peut également donner une estimation de la valeur du seuil de détection associé au modèle calibré.

La mémoire 14 de sauvegarde est apte à sauvegarder les paramètres de réglage venant d'être calculés dans l'unité 11a de calibration et une ou plusieurs versions précédentes de ces paramètres de réglage. Le transfert d'une nouvelle version des paramètres de réglage des moyens 13 de stockage à la mémoire 14 de sauvegarde est provoqué, au cours de l'étape E6, par l'actionnement d'un autre bouton 16 de commande matérielle ou logicielle du dispositif, par exemple sous forme d'une touche de commande sur un écran d'ordinateur. En l'absence de transfert des paramètres de réglages présents dans les moyens 13 à la mémoire 14 de sauvegarde, il est passé directement à l'étape E7 suivant l'étape E6.

Au cours de l'étape E7, il peut être sélectionné la version des paramètres de réglage, parmi les versions des paramètres de réglage présentes dans la mémoire de sauvegarde 14, qui est reçue par un module 18 de calcul pour calculer le facteur de performance. Par exemple, il est mémorisé dans la mémoire de sauvegarde 14, la dernière version et l'avant-dernière version venant d'être calculées des paramètres de réglage dans l'unité de calibration 11a, dans des parties 14a et 14b de celles-ci. Il peut être décidé d'utiliser soit la dernière version des paramètres de réglages A, B, C, D1 ou A, B, C, D1, D2, E au cours de l'étape E8 suivant l'étape E7 ou l'ancienne version des paramètres de réglages A, B, C, D1 ou A, B, C, D2, E au cours de l'étape E9 suivant l'étape E7. La mémorisation, au cours de l'étape E8 d'une nouvelle version calculée des paramètres de réglage dans la partie 14a provoque la mémorisation de l'ancienne version calculée des paramètres de réglage dans la partie 14b. La sélection de version des paramètres de réglage est effectuée par exemple sous la commande d'un troisième bouton 19 de commande matérielle ou logicielle du dispositif, par exemple sous forme d'une touche de commande sur un écran d'ordinateur.

Les premier, deuxième et troisièmes boutons 11a, 16, 19 de commande et l'entrée de gabarits G de l'unité 10d de réception de mesures sont présents sur une interface 20 de commande du dispositif, par exemple une ou plusieurs pages d'écran d'ordinateur ou autre.

L'unité de prédiction reçoit, au cours de l'étape E10 suivant les étapes E8 ou E9 , la mesure courante des paramètres de fonctionnement précités $T_{in}$, Q, $P_{out}$, $T_{réfr}$ et éventuellement $T_g$. Les mêmes capteurs 7, 8, 9, 10, 10b sont utilisés pour faire la mesure des paramètres de fonctionnement au cours de l'étape d'acquisition E2 pour entrer des mesures dans la mémoire 11 de l'unité 11a de calibration et au cours de l'étape de mesure E10 pour l'unité de prédiction 15. Les capteurs de mesure 7, 8, 9, 10, 10b sont aptes à fournir des mesures reproductibles, c'est-à-dire des valeurs de mesure égales pour des conditions de fonctionnement égales régnant dans le compresseur 3. Ainsi, les erreurs de mesure ou les biais et décalages inhérents à l'un ou à plusieurs des capteurs 7, 8, 9, 10, 10b sont pris en compte dès la calibration de manière à ne pas influencer, dans une large mesure, le calcul du facteur de performance au cours de l'étape de calcul dans l'unité de prédiction 15. L'unité de réception 10d des capteurs 7, 8, 9, 10, 10b est reliée en commun à la mémoire 11 et à l'unité 14 de prédiction pour fournir les valeurs mesurées des paramètres de fonctionnement $P_{in}$, Q, $P_{out}$, $T_{réfr}$, et le cas échéant $T_g$.

L'unité 14 de prédiction comporte une interface 17 de réception des mesures $P_{in}$, Q, $P_{out}$, $T_{réfr}$, et le cas échéant $T_g$ fournies par l'unité 10d de réception des capteurs 7, 8, 9, 10, 10b.

Les moyens 13 de stockage et l'interface 17 de réception sont reliés au module 18 de calcul automatique du facteur de performance, en fonction des paramètres de fonctionnement reçus par l'interface 17 et de la règle de calcul présente dans la mémoire de sauvegarde 14, au cours de l'étape E11 suivant l'étape E10.

Le facteur de performance calculé par le module 18 de calcul est fourni à des moyens 21 d'indication à un utilisateur, par exemple du type écran d'ordinateur, affichage numérique ou autre, pour être indiqué à un utilisateur, sous forme d'information de suivi de performance, par exemple de valeur numérique du facteur de performance, au cours de l'étape E12 suivant l'étape E11.

En variante ou en supplément, le facteur de performance calculé est envoyé à un module 22 de déclenchement d'alarme comportant une alarme 23, par exemple du type sonore ou message, déclenchée lorsque le facteur de performance calculé par l'unité 15 de prédiction ne vérifie pas des conditions prescrites pendant un temps donné. Dans l'exemple précédent correspondant à une consommation énergétique $P_{est}$ en tant que facteur de performance calculé, ces conditions prescrites de déclenchement correspondent par exemple au fait que la différence ou le rapport entre la consommation énergétique réelle $P_{cons}$ du compresseur et la consommation énergétique estimée $P_{est}$ dépassent un seuil prescrit de consommation énergétique $P_{seuil}$, le module 22 de déclenchement d'alarme comportant à cet effet un comparateur 24 recevant, au cours de l'étape E13 suivant l'étape E11, le facteur de performance calculé $P_{est}$ en provenance de l'unité 15 de prédiction, la valeur $P_{cons}$ mesurée de consommation énergétique réelle en provenance de l'unité 11a de réception de mesures et le seuil de consommation énergétique $P_{seuil}$ pouvant être prescrit par une entrée correspondante. Le comparateur 24 commande, au cours de l'étape E14 suivant l'étape E13, le déclenchement de l'alarme 23 en cas de dépassement du seuil $P_{seuil}$.

Le module 18 de calcul comporte un ou plusieurs indicateurs 13 de qualité du modèle utilisé par l'unité 15 de prédiction, par exemple de l'âge du modèle, de l'erreur relative moyenne de prédiction sur les grandeurs intervenant dans le module 22 de déclenchement d'alarme. Le ou les indicateurs I3 aident l'utilisateur à décider, si il doit , au cours de l'étape E7, choisir l'ancienne ou la nouvelle version du modèle calculé.

Les indicateurs I1, I2, I3 de qualité sont raccordés à l'interface 20 de commande du dispositif pour pouvoir être présentés à l'utilisateur.

L'unité 11 a de calibration, la mémoire 11, le premier module 12 de calcul, les moyens 13 de stockage, l'unité 15 de prédiction, la mémoire 14 de sauvegarde, l'interface 17 de réception, le module 18 de calcul et les moyens d'indication 21 peuvent être mis en oeuvre par tout moyen technique, par exemple électronique ou informatique tel qu'un ordinateur programmé.

Les phases de calibration et de calcul du facteur de performance peuvent être effectuées localement sur le site du compresseur ou à distance, l'unité 11a de calibration, l'unité 15 de prédiction, les moyens 21 d'indication, le module 22 de déclenchement d'alarme et l'interface 20 de commande étant prévues dans ce dernier cas à distance du compresseur et étant reliées aux autres éléments par un réseau de télécommunication. Ainsi, l'unité 11a de calibration, l'unité 15 de prédiction, les moyens 21 d'indication, le module 22 de déclenchement d'alarme et l'interface 20 de commande peuvent être prévus sur un système centralisant plusieurs sites pour la réception des données dans une base de données. Le résultat du calcul de performance est accessible à la fois localement et à distance.

Grâce à l'invention, il est possible de suivre les performances d'un compresseur avec une instrumentation réduite au minimum nécessaire pour le calcul de l'indicateur ou facteur de performance. En particulier, il n'est pas indispensable de connaître les paramètres de dimensionnement du compresseur, tels que les courbes caractéristiques de celui-ci. Le procédé et le dispositif de suivi suivant l'invention permettent de détecter précisément des dégradations apparaissant dans le compresseur sans requérir une instrumentation précise. Le procédé et le dispositif suivant l'invention permettent d'optimiser les opérations de maintenance du compresseur et de déterminer à bon escient le moment où celles-ci doivent être mises en oeuvre ou si aucune opération de maintenance n'est à mettre en oeuvre, grâce à la surveillance du facteur de performance calculé. Les coûts en maintenance en sont diminués, tandis que la productivité de l'équipement industriel peut en être augmentée en détectant suffisamment tôt les dégradations de celui-ci, ce qui permet de déclencher les opérations de maintenance avant plus ample aggravation des dégradations apparaissant. Les étapes E2, E3, E4, E5 de calibration dans l'unité de calibration sont par exemple mises en oeuvre après une opération de maintenance. Le procédé et le dispositif de suivi suivant l'invention s'affranchissent en même temps des paramètres non significatifs sur la performance du compresseur.

**Revendications**

1. Procédé de suivi automatique de performances d'un équipement industriel comprenant un compresseur réfrigéré (3) au cours du fonctionnement de l'équipement industriel, dans lequel

   - on mesure, à l'aide de moyens (7, 8, 9, 10) de mesure, des paramètres de fonctionnement de l'équipement industriel, comprenant au moins :

      - le débit (Q) de gaz dans le compresseur (3),
      - la pression ($P_{in}$) de gaz entrant dans le compresseur (3),
      - la pression ($P_{out}$) de gaz sortant du compresseur (3),
      - la température ($T_{réfr}$) du réfrigérant du compresseur (3),

   - on calcule, à l'aide de moyens (18) de calcul, à partir des paramètres mesurés et d'une règle dé calcul stockée dans des moyens (13) de stockage, un facteur de performance représentatif du fonctionnement de l'équipement industriel,
   - on indique à un utilisateur, à l'aide de moyens (21) d'indication, une information de suivi de performance en fonction du facteur de performance calculé.

2. Procédé de suivi suivant la revendication 1, **caractérisé en ce qu'**au cours d'une étape de calibration (E2, E3, E4), on mesure automatiquement, à l'aide desdits moyens de mesure, au moins une fois au cours du temps, lesdits paramètres de fonctionnement (Q, $P_{in}$, $P_{out}$, $T_{réfr}$, $T_g$) de l'équipement industriel, on mémorise des valeurs mesurées des paramètres de fonctionnement (Q, $P_{in}$, $P_{out}$, $T_{réfr}$, $T_g$) dans une mémoire (11) et on calibre la règle de calcul en fonction d'au moins un sous-ensemble parmi l'ensemble des valeurs mesurées des paramètres de fonctionnement (Q, $P_{in}$, $P_{out}$, $T_{réfr}$, $T_g$) présentes dans la mémoire (11), l'étape de calibration pouvant être redéclenchée par l'utilisateur en vue d'une nouvelle calibration de ladite règle de calcul.

3. Procédé de suivi suivant l'une quelconque des revendications précédentes, **caractérisé en ce que** la règle de calcul du facteur de performance comprend le calcul d'un rendement $\eta_{est}$ estimé du compresseur selon l'équation (2) suivante :

$$\eta_{est} = AQ + \frac{B\ P_{out}}{P_{in}} + C\ T_{réfr} + D_2 T_g + E$$

dans laquelle Q est le débit de gaz dans le compresseur,
$P_{in}$ est la pression de gaz entrant dans le compresseur,
$P_{out}$ est la pression de gaz sortant du compresseur,
$T_{réfr}$ est la température du réfrigérant du compresseur,
A, B, C, D2 et E sont des paramètres de réglage prédéterminés, la température $T_g$ du gaz entrant dans le compresseur étant mesurée, à l'aide des moyens (7, 8, 9, 10, 10b) de mesure, pour le paramètre D2 de réglage choisi non nul.

4. Procédé de suivi selon la revendication 3, **caractérisé en ce que** le facteur de performance correspond à une consommation énergétique $P_{est}$ estimée du compresseur selon l'équation (3) suivante :

$$P_{est} = \left[ \dot{Q}\, RT_{réfr}\, \ln\left(P_{out}/P_{in}\right) \right] \Big/ \eta_{est} \qquad (3)$$

**5.** Procédé de suivi suivant la revendication 2 et la revendication 3 ou 4, **caractérisé en ce que** les paramètres de réglage (A, B, C, D2, E) sont calculés par régression linéaire au moins à partir du sous-ensemble de valeurs mesurées des paramètres de fonctionnement (Q, $P_{in}$, $P_{out}$, $T_{réfr}$, $T_g$) présentes dans la mémoire (11).

**6.** Procédé de suivi suivant la revendication 2 ou l'une des revendications 3 et 4, lorsqu'elle dépend de la revendication 2 , **caractérisé en ce que** la règle de calcul est déterminée à partir d'un réseau neuronal dont l'auto-apprentissage est réalisé à partir du au moins sous-ensemble de valeurs mesurées des paramètres de fonctionnement (Q, $P_{in}$, $P_{out}$, $T_{réfr}$, $T_g$) présentes dans la mémoire (11).

**7.** Procédé de suivi suivant l'une quelconque des revendications 2, 5, 6 ou l'une quelconque des revendications 3 et 4, lorsqu'elle dépend de la revendication 2, **caractérisé en ce que** l'on effectue l'étape de calibration sur commande de l'opérateur.

**8.** Procédé de suivi suivant l'une quelconque des revendications précédentes, **caractérisé en ce que** l'on utilise le facteur de performance calculé pour déclencher une alarme (19), lorsque le facteur de performance calculé ne vérifie pas des conditions prescrites.

**9.** Dispositif pour la mise en oeuvre du procédé selon l'une quelconque des revendications précédentes, **caractérisé en ce qu'**il comporte des moyens (7, 8, 9, 10) de mesure desdits paramètres de fonctionnement, des moyens (13) de stockage de ladite règle de calcul, des moyens (18) de calcul dudit facteur de performance à partir de la règle de calcul présente dans les moyens (13) de stockage et à partir des mesures fournies par les moyens (7, 8, 9, 10) de mesure, et des moyens (21) d'indication d'une information de suivi de performance à un utilisateur à partir du facteur de performance calculé.

**10.** Dispositif suivant la revendication 9, adapté à la mise en oeuvre au moins du procédé de la revendication 2, **caractérisé en ce qu'**il comporte un moyen (1) de commande de calibration de la règle de calcul.

**Claims**

**1.** Method for automatically monitoring the performance of industrial equipment comprising a refrigerated compressor (3) during the operation of the industrial equipment, in which:

- operating parameters of the industrial equipment are measured using measurement means (7, 8, 9, 10), these parameters comprising at least:

  - the flow rate (Q) of the gas through the compressor (3),
  - the pressure ($P_{in}$) of the gas entering the compressor (3),
  - the pressure ($P_{out}$) of the gas leaving the compressor (3),
  - the temperature ($T_{cool}$) of the coolant for the compressor (3);

  - a performance factor representative of the operation of the industrial equipment is calculated, using calculation means (18), from the measured parameters and from a calculation rule stored in storage means (13); and
  - performance monitoring information as a function of the calculated performance factor is indicated to a user by indication means (21).

**2.** Monitoring method according to Claim 1, **characterized in that**, during a calibration step (E2, E3, E4), said operating parameters (Q, $P_{in}$, $P_{out}$, $T_{cool}$, $T_g$) of the industrial equipment are automatically measured, using said measurement means, at least once over the course of time, measured values of the operating parameters (Q, $P_{in}$, $P_{out}$, $T_{cool}$, $T_g$) are stored in a memory (11) and the calculation rule is calibrated as a function of at least one subset from among the set of measured values of the operating parameters (Q, $P_{in}$, $P_{out}$, $T_{cool}$, $T_g$) present in the memory (11), the calibration step being able to be retriggered by the user for a new calibration of said calculation rule.

3. Monitoring method according to either of the preceding claims, **characterized in that** the rule for calculating the performance factor comprises the calculation of an estimated efficiency $\eta_{est}$ of the compressor according to the following equation (2):

$$\eta_{est} = AQ + B\frac{P_{out}}{P_{in}} + CT_{cool} + D_2 T_g + E$$

in which Q is the flow rate of the gas through the compressor,
$P_{in}$ is the pressure of the gas entering the compressor,
$p_{out}$ is the pressure of the gas leaving the compressor,
$T_{cool}$ is the temperature of the coolant for the compressor,
A, B, C, D2 and E are predetermined adjustment parameters, the temperature $T_g$ of the gas entering the compressor being measured, using measurement means (7, 8, 9, 10, 10b), for the chosen nonzero adjustment parameter D2.

4. Monitoring method according to Claim 3, **characterized in that** the performance factor corresponds to an estimated energy consumption $P_{est}$ of the compressor according to the following equation (3):

$$P_{est} = [QRT_{cool} \times \ln(P_{out}/P_{in})]/\eta_{est} \qquad (3).$$

5. Monitoring method according to Claim 2 and Claim 3 or 4, **characterized in that** the adjustment parameters (A, B, C, D2, E) are calculated by linear regression from the at least one subset of measured values of the operating parameters (Q, $P_{in}$, $P_{out}$, $T_{cool}$, $T_g$) present in the memory (11).

6. Monitoring method according to Claim 2 or either of Claims 3 and 4, when it depends on Claim 2, **characterized in that** the calculation rule is determined on the basis of a neural network, the self-learning of which is achieved on the basis of the at least one subset of measured values of the operating parameters (Q, $P_{in}$, $P_{out}$, $T_{cool}$, $T_g$) present in the memory (11).

7. Monitoring method according to any one of Claims 2, 5 and 6, or either of Claims 3 and 4, when it depends on Claim 2, **characterized in that** the calibration step is carried out on command by the operator.

8. Monitoring method according to any one of the preceding claims, **characterized in that** the calculated performance factor is used to trigger an alarm (19) when the calculated performance factor does not meet the prescribed conditions.

9. Device for implementing the method according to any one of the preceding claims, **characterized in that** it comprises means (7, 8, 9, 10) for measuring said operating parameters, means (13) for storing said calculation rule, means (18) for calculating said performance factor from the calculation rule present in the storage means (13) and from the measurements supplied by the measurement means (7, 8, 9, 10), and means (21) for indicating performance monitoring information to a user on the basis of the calculated performance factor.

10. Device according to Claim 9, suitable for implementing at least the method of Claim 2, **characterized in that** it includes a calculation rule calibration command means (1).

**Patentansprüche**

1. Verfahren zur automatischen Verfolgung der Leistungen einer einen Kühlkompressor (3) umfassenden industriellen Einrichtung während des Betriebs der industriellen Einrichtung, wobei

- Funktionsparameter der industriellen Einrichtung durch Messmittel (7, 8, 9, 10) gemessen werden, wobei die Funktionsparameter mindestens folgende umfassen:

- den Gasdurchfluss (Q) im Kompressor (3),

- den Druck ($P_{ein}$) des in den Kompressor (3) eintretenden Gases,
- den Druck ($P_{aus}$) des aus dem Kompressor (3) austretenden Gases,
- die Temperatur ($T_{Kühl}$) des Kühlmittels des Kompressors (3),

- mittels der gemessenen Parameter und einer in Speichermitteln (13) gespeicherten Berechnungsregel mit Hilfe von Berechnungsmitteln (18) ein Leistungsfaktor berechnet wird, der die Funktionsweise der industriellen Einrichtung darstellt,
- dem Benutzer mittels Anzeigemitteln (21) eine Information über die Verfolgung der Leistung in Abhängigkeit von dem berechneten Leistungsfaktor angezeigt wird.

2. Verfahren zum Verfolgen nach Anspruch 1, **dadurch gekennzeichnet, dass** während eines Kalibrierungsschrittes (E2, E3, E4) automatisch mindestens einmal im Laufe der Zeit mittels der Messmittel die Funktionsparameter (Q, $P_{ein}$, $P_{aus}$, $T_{Kühl}$, $T_g$) der industriellen Einrichtung gemessen werden, die Messwerte der Funktionsparameter (Q, $P_{ein}$, $P_{aus}$, $T_{Kühl}$, $T_g$) in einem Speicher (11) gespeichert werden und die Berechnungsregel abhängig von mindestens einer Untergruppe in der Gesamtgruppe der in dem Speicher (11) vorhandenen Messwerte der Funktionsparameter (Q, $P_{ein}$, $P_{aus}$, $T_{Kühl}$, $T_g$) kalibriert wird, wobei der Kalibrierungsschritt durch einen Benutzer hinsichtlich einer neuen Kalibrierung der Berechnungsregel erneut gestartet werden kann.

3. Verfahren zum Verfolgen nach einem der vorhergehenden Ansprüche, **dadurch gekennzeichnet, dass** die Berechnungsregel des Leistungsfaktors die Berechnung einer geschätzten Leistung $\eta_{gesch}$ nach der folgenden Gleichung (2) umfasst:

$$\eta_{gesch} = AQ + B \; \frac{P_{aus}}{P_{ein}} + C \; T_{Kühl} + D_2 T_g + E$$

in der Q der Gasdurchfluss im Kompressor,
$P_{ein}$ der Druck des in den Kompressor eintretenden Gases,
$P_{aus}$ der Druck des aus dem Kompressor austretenden Gases,
$T_{Kühl}$ die Temperatur des Kühlmittels des Kompressors ist, und
A, B, C, D2 und E vorbestimmte Regulierungsparameter sind, wobei die Temperatur $T_g$ des in den Kompressor eintretenden Gases mit Hilfe von Messmitteln (7, 8, 9, 10, 10b) gemessen wird, wenn der gewählte Regulierungsparameter D2 nicht Null ist.

4. Verfahren zum Verfolgen gemäß Anspruch 3, **dadurch gekennzeichnet, dass** der Leistungsfaktor einem Energieverbrauch $P_{gesch}$ des Kompressors entspricht, der gemäß der folgenden Gleichung (3) geschätzt wurde:

$$P_{gesch} = [Q \; RT_{Kühl} \; In \; (P_{ein}/P_{aus})] / \eta_{gesch} \qquad\qquad (3)$$

5. Verfahren zum Verfolgen gemäß Anspruch 2 und Anspruch 3 oder 4, **dadurch gekennzeichnet, dass** die Regulierungsparameter (A, B, C, D2, E) durch lineare Regression mittels mindestens einer Untergruppe von Messwerten der in dem Speicher (11) vorhandenen Funktionsparameter (Q, $P_{ein}$, $P_{aus}$, $T_{Kühl}$, $T_g$) berechnet werden.

6. Verfahren zum Verfolgen gemäß Anspruch 2 oder einem der Ansprüche 3 und 4, insofern sie sich auf Anspruch 2 stützen, **dadurch gekennzeichnet, dass** die Berechnungsregel durch ein Neuronalnetz bestimmt wird, dessen Selbstlernfähigkeit durch mindestens eine Untergruppe von Messwerten der in dem Speicher (11) vorhandenen Funktionsparameter (Q, $P_{ein}$, $P_{aus}$, $T_{Kühl}$, $T_g$) verwirklicht wird.

7. Verfahren zum Verfolgen gemäß einem der Ansprüche 2, 5, 6 oder einem der Ansprüche 3 und 4, insofern sie sich auf Anspruch 2 stützen, **dadurch gekennzeichnet, dass** der Kalibrierungsschritt durch den Befehl eines Bedieners ausgeführt wird.

8. Verfahren zum Verfolgen gemäß einem der vorhergehenden Ansprüche, **dadurch gekennzeichnet, dass** der berechnete Leistungsfaktor verwendet wird, um einen Alarm (19) auszulösen, wenn der berechnete Leistungsfaktor nicht den vorgeschriebenen Bedingungen entspricht.

9. Vorrichtung zur Umsetzung des Verfahrens gemäß einem der vorhergehenden Ansprüche, **dadurch gekennzeichnet, dass** sie Mittel (7, 8, 9, 10) zum Messen der Funktionsparameter, Mittel (13) zum Speichern der Berechnungsregel, Mittel (18) zum Berechnen des Leistungsfaktors durch die in den Speichermitteln (13) vorhandene Berechnungsregel und durch Messungen, die durch die Messmittel (7, 8, 9, 10) bereitgestellt werden, und Mittel (21) zum Anzeigen einer Information an einen Benutzer über die Verfolgung der Leistung durch einen berechneten Leistungsfaktor umfasst.

10. Vorrichtung nach Anspruch 9, die zur Umsetzung mindestens des Verfahrens nach Anspruch 2 geeignet ist, **dadurch gekennzeichnet, dass** sie ein Mittel (1) zum Befehlen der Kalibrierung der Berechnungsregel umfasst.

$$ \boxed{DEBUT} $$

E1

INITIALISER
CALIBRATION
?

NON → $\boxed{FIN}$

OUI

ACQUISITION MESURES
$Q, P_{in}, P_{out}, T_{réfr}, P_{cons}, (Tg)$

E2

CALCUL REGLAGE
$A, B, C, D_1, (D_2, E)$

E3

MEMORISATION REGLAGE
$A, B, C, D_1, (D_2, E)$

E4

## FIG.1

DEBUT

E5

TRANSFERT — NON

OUI

E6 — SAUVEGARDE
ANCIENNE ET NOUVELLE
VERSION REGLAGE
$A,B,C,D_1,(D_2,E)$

E7

NOUVELLE
VERSION REGLAGE
$A,B,C,D_1,(D_2,E)$?

E9

UTILISATION ANCIENNE
VERSION REGLAGE
$A,B,C,D_1(D_2,E)$

E8 — UTILISATION DERNIERE
VERSION REGLAGE
$A,B,C,D_1,(D_2,E)$

E10 — MESURES
$Q,P_{in},P_{out},T_{réfr},(Tg)$

E11 — CALCUL DU FACTEUR
$P_{est}$ DE PERFORMANCE

E13

$|P_{est}-P_{réel}|>P_{seuil}$ — OUI

NON

E12 — INDICATION

FIN

E14 — ALARME

**_FIG.2_**

13

**FIG.3**